# EUROPEAN PATENT APPLICATION

(11) **EP 1 795 075 A1**
(43) Date of publication of application: **13.06.2007**
(21) Application number: 05111736.4
(22) Date of filing: 06.12.2005
(51) Int. Cl.: A23L 1/22, A23L 1/00, A23L 1/304, A23L 1/27, A23L 1/275

(54) **Process for the preparation of a food additive for a microwave food product and food additive for microwave food product**

(71) Applicant: Nizo Food Research B.V., 6718 ZB Ede (NL)
(72) Inventor: Tromp, Robert Hans, 3524 CN Utrecht (NL); Laats, Jetske Martine, 6721 ZN Bennekom (NL)
(74) Representative: van Westenbrugge, Andries

(57) **Abstract**

This invention provides food additive and a process for the preparation of the food additive for a microwave food product, comprising a) providing CaCl₂-treated porous particles by mixing an active ingredient, a liquid, a particulate porous material having a weight averaged particle size between 0.005 and 5 mm, and CaCl₂; and b) optionally coating the CaCl₂-treated porous particles with a coating. When applied on or in microwave food products, the CaCl₂-treated porous particles release the active ingredient(s) upon microwave radiation.

## Description

### Field of invention

The present invention relates to a process for the preparation of a food additive for a microwave food product, to a food additive and its use for a microwave food product, to a microwave food product and to a method of preparing a microwave food product.

### Background of invention

Heating by microwave ovens is an increasingly standard way to prepare meals in modem kitchens. This is a source of both challenges and opportunities. The challenges lie in the fact that the heating period is short. As a consequence thereof, for instance structure and flavour generating processes preferably happen fast. The use of microwave ovens is part of a demand for flexibility, so microwave meals should withstand long shelf lives without for instance loosing their flavour and freshness.

Several methods are known in the art for instance to prevent loss of flavour, as e.g. described in US2003203076. However, the solution presented in this document is only applicable to foods that can be wrapped in a pastry. JP2001199482 describes food packaging material suitable for heating by a microwave oven, which prevents excess moisture contained in foods and foodstuffs from being brought into contact with the foods or the like when the foods and foodstuffs containing much moisture are heated by the microwave oven, and with which flavour of the foods is not spoiled.

### Summary of invention

It is an object of the invention to provide an alternative way to reduce or to prevent for instance loss of flavour or aroma in a microwave food product, such that ready to eat microwave foods can be obtained that have a desired flavour or aroma, respectively.

In a first aspect of the invention, there is provided a process for the preparation of a food additive for a microwave food product, comprising a) providing CaCl₂-treated porous particles by mixing an active ingredient, a liquid, a particulate porous material having a weight averaged particle size between 0.005 and 5 mm, and CaCl₂; and b) optionally coating the CaCl₂-treated porous particles with a coating.

In a further aspect of the invention, there is provided a food additive for a microwave food product obtainable by the process according to the invention. In yet a next aspect of the invention a microwave food product comprising a food additive is provided. According to another aspect of the invention a method of preparing a microwave food product comprising treating a microwave food product with a food additive according to the invention is provided.

### Detailed description

Herein, the term "microwave food product" relates to food products like microwave meals, snacks, drinks, etc., as known to the person skilled in the art, which can be heated in a microwave. In a specific embodiment, it refers to a packed food product that is intended to be heated with a microwave (such as "fast food"). The ready product, thus after microwave treatment (i.e. ready to eat), is called "ready microwave food" or "ready to eat microwave food". The term "microwave", "microwave oven" or "magnetron" refers to a device that uses electromagnetic radiation to rapidly heat or cook food, as known to the person skilled in the art. The radiation causes molecules, in particular water molecules in the food to vibrate, producing heat, which heat is distributed through the food by diffusion and convection. A special electron tube called a magnetron produces electromagnetic radiation (typically in the range of about 1-6 GHz). This radiation is herein also indicated as "micro wave radiation" or "radiation". To ensure even heating, the magnetron may direct its waves at a rotating metal disk with offset vanes, which scatters the waves through the oven cavity; a rotating platform for the food is sometimes used in addition.

The term "food" is known to the person skilled in the art and refers to e.g. meals, snacks, sauces, dressings, drinks, etc., and that, in the context of this invention, can be heated in a microwave.

The term food grade is known to the person skilled in the art and refers herein to ingredients used for preparing the food additive of the invention and which ingredients are considered safe for use in food by a local relevant regulatory authority, for instance in the USA the "Food and Drug Administration", in the Netherlands the "Keuringsdienst van Waren". Preferably, all ingredients of the food additive of the invention are food grade. For example, silicon dioxide is food grade and is known as E551 and CaCl₂ (calcium chloride) is food grade and is known as E509. The terms "silicon dioxide", "silica", or porous "silica" refer to porous silica, especially to porous amorphous silica, as known to the person skilled in the art. In a preferred embodiment, it refers to food grade silica E551. The term liquid is known to the person skilled in the art. In a preferred embodiment the liquid comprises water. More preferably, water is used as liquid.

The particulate porous material used herein is preferably silicon dioxide, which has pore sizes between about 0.5 nm and 5 µm, more preferably between about 1 nm and 1 µm. Also zeolites may be used, like Si-Al zeolites, as known to the person skilled in the art. Preferably such zeolites are also food grade. Hence, according to an embodiment a particulate porous material is used wherein the particulate porous material comprises a zeolite or porous amorphous silica, preferably food grade zeolite or silica. The particulate porous material may also comprise particles comprising a combination of zeolite and silica. The porosity is preferably between about 40-95 %, more preferably larger than about 50 %.

Preferably, the porous silicon dioxide is amorphous, such as Zeofree® of Huber Engineered Materials, or similar products. Alternative or in addition to the porous material for use in the invention (especially porous and amorphous SiO₂), SiO₂ aerogel may be used or diatomaceous earth or the above mentioned zeolites or combinations thereof.

Particulate herein means that the porous material as one of the ingredients for the food additive of the invention is a powder consisting of particles. According to the invention, the weight averaged particle size of the particulate porous material, like food grade porous silica, is between about 0.005 mm (5 µm) and 5 mm, more preferably between about 0.01 mm (10 µm) and 1 mm. Particle sizes can for instance be determined by microscopy (like confocal microscopy) or with a Coulter counter, or other methods, as known to the person skilled in the art.

In the invention, the porous particles are treated with calcium chloride (CaCl₂). Instead of CaCl₂ or in addition to CaCl₂, also other calcium compounds may be used, preferably calcium salts (preferably food grade) which have a solubility of 1 gram/l or more in water at 80°C, more preferably one or more calcium compounds selected from the group consisting of calcium citrate (E333), calcium ferrocyanide (E538), calcium formiate (238), calcium glutamate (E623), calcium malate (E352), calcium orthophosphates (E341), calcium polyphosphate (544), calcium propionate (E282), and calcium hydrogen sulphite (E227). Hence, in an embodiment instead of or in addition to CaCl₂ one or more of the above mentioned calcium compounds may be used. In yet another embodiment, instead of or in addition to Ca-compounds, Mg analogues may be used such as magnesium chloride (E511) or magnesium sulphate, etc.. Hence, the term "CaCl₂-treated porous particles" especially refers to porous particles treated with CaCl₂, but refers in another embodiment to porous particles treated with one or more of the above mentioned calcium compounds, and in yet another embodiment, refers to particles treated with one or more of Mg analogues of the above mentioned calcium compounds. Combinations of salts may also be used.

In a preferred embodiment, the present invention provides a process wherein the CaCl₂-treated porous particles are provided by mixing the active ingredient, an aqueous CaCl₂ solution, and particulate porous material, more preferably a process wherein the CaCl₂-treated porous particles are provided by mixing the active ingredient, a 0.01-15 M CaCl₂ aqueous solution, and 0.1-95 wt.% (relative to the total weight of the aqueous solution) particulate porous material, more preferably 0.5-90 wt.%, even more preferably 1-80 wt.%, more preferably about 2-50 wt.% (relative to the total weight of the aqueous solution). Preferably, the CaCl₂ solution is a 0.05-15 M, more preferably a 0.1 to 5 M, even more preferably a 0.1-2 M solution, and yet even more preferably a 0.2-1.5 M solution. In yet another embodiment, the CaCl₂ solution comprises a saturated or over-saturated CaCl₂ solution. The CaCl₂ solution may comprise about 0.001-50 wt.% of the active ingredient. Active ingredients may be solved in the CaCl₂ solution but may also be present in the solution by suspending them in the solution (when the solubility is low), optionally using an emulsifier, as will be known to the person skilled in the art. Hence, the term "CaCl₂ solution" refers to a solution or suspension, containing CaCl₂ (or one or more of above mentioned analogues) in solution or in suspension and suitably containing an active ingredient in solution or suspension.

Mixing may e.g. be done by preparing the CaCl₂ solution, adding the active ingredient to the solution and mixing the solution and the active ingredient and subsequently admixing the silica to the solution. In this way the silica gets impregnated with CaCl₂ and the active ingredient. Hence, the term "CaCl₂-treated porous particles" refers herein to a porous particulate material treated (e.g. impregnated) with CaCl₂ and an active ingredient. In case zeolites are used, next to impregnation and/or instead of impregnation, the zeolite may at least partially be exchanged with Ca ions. For example using a Na-zeolite, H-zeolite or NH₄-zeolite (Na, H or NH₄ being the counter ions), Na, H or NH₄, respectively may at least partially be exchanged by Ca. Impregnation and/or ion exchange may take place, as will be clear to the person skilled in the art.

Mixing may be performed at temperatures between about 5 and 100°C, preferably between about 15 and 35°C; characteristic mixing times are at least about 1 minute, more preferably at least about 5 minutes.

The mixing process may also be a so-called incipient wetness process, as known to the person skilled in the art. In an incipient wetness technique an amount of liquid is added that fills the pores of the porous material (impregnation). By mixing the porous material and the liquid, the liquid is absorbed by the porous material and substantially no liquid is left. In case zeolites are used, the zeolites are preferably treated with CaCl₂ by the incipient wetness process.

Alternatively the particulate porous material may be impregnated with active ingredient prior to CaCl₂ treatment. By doing so pre-impregnated or pre-treated particulate porous material is obtained. The particulate porous material is then submitted to CaCl₂ treatment as described above. In the process described above the active ingredient in the CaCl₂ solution may then be omitted. Impregnation of particulate porous material with active ingredient may be carried out in solution or by spraying etc. e.g. by methods known to one skilled in the art and may beneficial in case of active ingredients that are known to adhere well to particulate porous material such as silicon dioxide and zeolites.

Having obtained the CaCl₂-treated porous particles by mixing the starting materials, either as suspension or as powder via incipient wetness, a food additive particulate powder may be retrieved. In case more liquid is used than can be absorbed by the porous material, excess liquid may be evaporated (or concentrated, vide infra) or a centrifuge and decantation step may be applied. However, also other techniques may be used like freeze-drying or spray-drying. Having obtained CaCl₂-treated porous particles after incipient wetness, after a centrifuge and decantation step, after spray drying, or with other techniques known in the art, an optional further drying step may be applied, e.g. to obtain the desired liquid content (preferably water), and an optional further sieving step may be applied, for instance to obtain the desired particle size (distribution).

In a specific embodiment, the CaCl₂-treated porous particles, may further be provided with a coating. An advantage of using a coating is that the active ingredient may better be contained within the particle and will not easily migrate out of the CaCl₂-treated porous particles when present in and/or on a microwave food product.

Preferably, the coating comprises a hydrocolloid, i.e. a hydrocolloid coating is formed on the CaCl₂-treated porous particles. A hydrocolloid is a macromolecule, such as a polysaccharide polymer or a protein, that is water soluble and may form a gel with water. The term "hydrocolloid" is known to the person skilled in the art and refers, especially in the food preparation, e.g. to a colloidal substance obtained from seaweeds; mucilaginous material extracted from the cell walls of some algae, especially members of the brown and red algae, which is used for its stabilizing and gelling properties in commercial products, and cell walls of higher plants (especially higher plants). A coating may also comprise a fat or oil, in case such oil is solid at room temperature. In a preferred embodiment, a coating is provided or used wherein the coating comprises one or more materials selected from the group consisting of cellulose, alginate, carrageenan, gellan, a pectin, a fat and an oil solid at room temperature. In a most preferred embodiment, an alginate is used. Alginates are known to the person skilled in the art (see e.g. Industrial Gums, Polysaccharides and their Derivatives (3rd Edition), by R.L. Whistler et al.) and refer to fast-setting mould materials and is a general term for salts of alginic acid, especially with sodium but also calcium ions as cations.

An additional advantage of using a fat or an oil as coating is that also diffusion of water out of the particle may be diminished or even eliminated (in addition to diminishing or eliminating migration of the active ingredient out of the particle). In a specific embodiment, the particles of the invention comprise two or more coatings, e.g. an alginate coating as first coating and a fat or oil (solid at room temperature) coating as second coating.

Preferably a food additive comprising coated CaCl₂-treated porous particles is prepared wherein the optional coating has a coating thickness between 0.5 µm and 5 mm, more preferably 10 µm and 1 mm. The particle size of the coated CaCl₂-treated porous particles is preferably between about 6 µm and 15 mm, more preferably between about 30 µm and 3 mm (like e.g. about 50-200 µm). To obtain these dimensions of the coated particles, single CaCl₂-treated porous particles or agglomerates of CaCl₂-treated porous particles may be coated (vide infra), as will be clear to the person skilled in the art.

Methods known to the person skilled in the art can be used to coat the CaCl₂-treated porous particles. For example, after a centrifuge and decantation step, the pellet is collected and aliquots of the pellet (e.g. 0.005- 2 ml, preferably 0.01 - 1 ml aliquots), after an optional drying step and/or optional sieving step, are added to a liquid that will form a coating, like a hydrocolloid, fat or oil (solid at room temperature). Another method that can be applied is e.g. by spraying the mixture or suspension as obtained in the mixing step into a liquid that will form a coating on the CaCl₂-treated porous particles. When first a powder is made of the CaCl₂-treated porous particles, the thus obtained particulate food additive can be introduced in the liquid that will form a coating on the particles. In this way, a food additive comprising coated CaCl₂-treated porous particles is obtained. Herein, the aliquots of the pellet (e.g. 0.005- 2 ml, preferably 0.01 - 1 ml aliquots) may in an embodiment be agglomerates of CaCl₂-treated porous particles.

In a preferred embodiment, an alginate is used to provide an alginate coating on the CaCl₂-treated porous particles, for instance by using a 0.1-10 wt. % alginate, preferably a 0.1-10 wt.% sodium alginate, solution. This causes an alginate coating to be formed on the outside of the particles. The gel-coated porous silica particles may be sieved off, washed with water and may be dried in order to obtain a food additive particulate powder. For instance by dripping aliquots of the pellet into the alginate solution, or by spraying the mixture or suspension as obtained in the mixing step into the alginate solution, or by adding a CaCl₂-treated porous particles powder into the alginate solution, a coating will be formed. The coated particles can be retrieved from the solution by sieving, centrifuge, etc.

Hence, in an embodiment a process is provided for making food grade particles wherein a porous silica calcium chloride mixture is dripped or otherwise dispersed in a solution of hydrocolloids that forms a gelled network coating around the silica particles (core) probably due to interaction with the calcium included in the silica particles (core) material. Herein, the term "porous silica calcium chloride mixture" refers to the porous particles which are treated with CaCl₂-treated and the active ingredient (i.e. the CaCl₂-treated porous particles) as (free flowing) powder, as suspension, slurry or concentrate, etc., as provided according to the process of the invention.

In another preferred embodiment of this invention particles of the CaCl₂-treated porous silica are made by dripping aliquots of the pellet into molten fat or in an oil, or by spraying the mixture or suspension as obtained in the mixing step into the molten fat or the oil, or by adding a CaCl₂-treated porous particles powder into the molten fat or the oil. The temperature of the fat or oil, when the CaCl₂-treated porous particles (in suspension, as aliquots of the centrifuged pellet or as powder) is added, preferably has a temperature marginally higher than the melting temperature of the fat or oil. Preferably, the liquid for providing the coating has a temperature of about 1-40°C, preferably about 2-20°C, higher than the melting point of the fat or oil. A solid fat layer is formed around the cold CaCl₂-treated porous particles and the particles may for instance be scooped out of the liquid fat. Hence, when adding the CaCl₂-treated porous particles (in suspension, as aliquots of the centrifuged pellet or as powder), the temperature of these particles is preferably at least 2°C, more preferably at least 10°C, lower than the melting point of the fat or oil that is used for providing the coating to the particles.

Hence, in an embodiment, a process is provided for making food grade particles wherein a porous silica calcium chloride mixture is dripped or otherwise dispersed in a solution of liquid oil or fat that forms a solid fat or oil coating around the core as a result of lower temperature of the droplets compared to the liquid oil or fat.

In yet another preferred embodiment of this invention particles of the CaCl₂-treated porous silica are made by mixing (aliquots of) the pellet into molten fat or in an oil to obtain a suspension. This suspension is sprayed or dripped into a cold (typically more than 10°C below the melting temperature of the fat or oil used) liquid, which may e.g. be liquid nitrogen, icy water, etc, resulting in solid fat/oil coated pellet fragments.

Hence, in an embodiment a process is provided for making (food grade) particles containing porous silica calcium chloride mixture coated by a fat/oil layer. This process is also known as "spray chilling".

Embodiments of oils or fats that may be used are palm fat, hardened rapeseed oil, edible wax, and other known oils or fats that are suitable for application in the invention.

In a specific embodiment, in addition to the CaCl₂-treated porous particles, also the coating comprises an active ingredient, wherein the active ingredient is also selected from one or more ingredients selected from the group consisting of colorants, flavours and fragrances. Herein the term "active ingredient" may also refer to a combination of active ingredients, e.g. a blend of fragrances, or a blend of flavour(s) and fragrance(s), etc.

Colorants are known to the person skilled in the art and indicate substances like e.g. dyes or pigments. A flavour is a term known to the person skilled in the art and indicates a substance that induces the sensations detected by the tongue and in the mouth which, with smell and texture, give food its taste (flavours inducing a sweet, an acid, or sour, effect etc., flavours like butter flavour, flavours of fruit, etc.). A fragrance is a term known to the person skilled in the art and indicates an aroma, i.e. a (distinctive) odour that may be pleasant (like the fragrance of baked bread or of a cooked meal, of onion, a cheese, garlic, fresh fruits, of one or more spices such as e.g. cinnamon, etc.)

It appears that the (optionally coated) CaCl₂-treated porous particles of the food additive of the invention release their content, i.e. the active ingredient, on heating. Surprisingly, the particles appear to explode within the magnetron due to the radiation, thereby releasing the active ingredient. When applied on or in microwave food products, this behaviour leads to the advantageous release of the active ingredient(s) at the desired time. This specific release response of the CaCl₂-treated porous particles to microwave radiation makes the release as timely as possible (i.e. at the time desired by the user or as intended by the producer of the microwave food). The active ingredient, such as a flavour or fragrance may burst while heating with the microwave, but for example also just before or at the moment of taking the food out of the microwave. Hence, in this way it is prevented or diminished that for instance flavour or aroma in a microwave food product is reduced or spoiled during its life time before being processed in a microwave, such that ready microwave foods can be prepared in a microwave that have a desired flavour or aroma, respectively.

The release of the active ingredient can be tuned by selecting the type of particulate porous material, the Ca content, the water contained by the CaCl₂-treated porous particles and the type and thickness of the optional coating, as will be clear to the person skilled in the art. Without being bound to any theory, the sudden and sharp response that may be obtained, leading to the release of active ingredient(s) may be due to the fact that the CaCl₂-treated porous particles may fracture due to build up of internal liquid (preferably water) pressure (explosion).

Different active ingredients can be used, depending upon the desired application. In an embodiment, a food additive is provided wherein the active ingredient is selected from one or more ingredients from the group consisting of colorants, flavours and fragrances. Therefore, the invention is also directed to the use of the food additive of the invention for inducing one or more effects selected from the group consisting of a colorant, flavour and aromatic effect. Preferably, these active ingredients are food grade. Embodiments of flavours are for instance aldehydes such as acetaldehyde, 3-methylbutanal, nonanal; ketones such as diacetyl, 2-hexanon, 2-nonanon; esters, such as ethylpropanoate, propylacetate, butylacetate; sulphur containing compounds such as dimethyldisulfide, dimethyltrisulfide, benzothiazole; fatty acids such as acetic acid, butyric acid, isovaleric acid; lactones, limonene, phenol, benzaldehyde, etc.

Instead of or in addition to one or more of colorants, flavours and fragrances as active ingredients, also other nutritional active ingredients may be applied as active ingredient such as pharmaceuticals, food supplements, nutraceuticals (dietary supplements and/or nutritional ingredients with specific health or medical benefits, or texturizers. Examples include folic acid (to prevent birth defects) or pectin and fiber (to reduce the risk of colon cancer)), etc.

Another advantage appears that by using the food additive according to the invention in/on microwave products, volatile flavours and/or other active ingredients may be protected from disappearing and/or from deterioration. Hence, the quality during long shelf lives of microwave food products may be improved by application of the invention.

The optionally coated CaCl₂-treated porous particles can be provided as liquid food additive (suspension as prepared or as concentrate), e.g. to be sprayed on a microwave food product. Hence, in an embodiment there is provided a food additive comprising more than about 50 wt.% water, relative to the total weight of the food additive. This can be used as slurry, concentrate or suspension, that can be directly applied to the microwave food product or can be used during preparation of the microwave food product.

However, the concentrate can also further be concentrated, e.g. by evaporation, spray-drying, freeze-drying or other techniques known in the art, in order to obtain a particulate food additive, like a free flowing power, containing about 5-50 w.% water, relative to the total weight of the food additive (vide supra).

As described above, the optionally coated CaCl₂-treated porous particles may be provided as powder (preferably a free flowing powder), e.g. to be applied to the microwave food product and/or to be incorporated in the microwave food product. In a specific embodiment, there is provided a food additive obtainable by the process of the invention. Preferably, there is provided a food additive comprising 30-100 wt.% CaCl₂-treated porous particles and 0-70 wt.% coating, relative to the total amount of the food additive, and wherein the CaCl₂-treated porous particles comprises 5-95 wt.% water, 0.0001-10 wt.% active ingredient, 0.01-10 wt. CaCl₂, and 5-95 wt.% particulate porous material, relative to the total amount of the CaCl₂-treated porous particles. As will be clear to the person skilled in the art, the weight percentages (relating to the CaCl₂-treated porous particles) add up to 100 %. For example, the CaCl₂-treated porous particles may comprise 95% water (or more precisely 94.8999 wt.%, but this is for the sake of simplicity rounded off to 95 wt.%), 0.0001 wt% active ingredient, 0.01 wt.% CaCl₂ and 5 wt.% particulate porous material, adding up to 100 wt.%. Or, in another example the CaCl₂-treated porous particles may comprise 50% water, 0.6 wt.% active ingredient, 2.4 wt.% CaCl₂ and 47 wt.% particulate porous material, adding up to 100 wt.%.

Preferably, the CaCl₂-treated porous particles comprise about 10-90 wt.% water, more preferably about 20-80 wt.% water (relative to the total amount of the CaCl₂-treated porous particles). Preferably, the CaCl₂-treated porous particles comprise about 0.001-5 wt.% active ingredient (relative to the total amount of the CaCl₂-treated porous particles). Preferably the CaCl₂-treated porous particles comprise about 0.1-15 wt. CaCl₂ (relative to the total amount of the CaCl₂-treated porous particles). Further, preferably the CaCl₂-treated porous particles comprise about 10-90 wt.% particulate porous material, more preferably about 20-80 wt.% (relative to the total amount of the CaCl₂-treated porous particles).

As will be clear to the person skilled in the art, the food additive according to the invention may comprise further optional ingredients, such as preservatives, emulsifiers (e.g. in the case of a concentrate or emulsion), stabilizers, thickeners, flow agents or glidants (to improve the flowability of powders and granulations), etc.

According to another aspect of the invention, a microwave food product comprising a food additive according to the invention is provided, i.e. a microwave food product is provided comprising optionally coated CaCl₂-treated porous particles. The microwave food product may e.g. be a meal, a snack, a drink, etc., and the microwave food product may contain the particles of the invention, where applicable (food, snack) may be coated with the CaCl₂-treated porous particles, or may contain and be coated (where applicable) with the CaCl₂-treated porous particles of the invention. Hence, according to yet another aspect there is provided the use of the food additive of the invention for treating a microwave food product. Herein "treating" may comprise coating with or applying the present CaCl₂-treated porous particles onto the microwave food (dipping, sprinkling, spraying, powdering, buttering/larding) or including or incorporating the present CaCl₂-treated porous particles into the food (for instance during fabrication in a production facility unit), or both. Coating may be performed during fabrication of the microwave food product, but may e.g. also be done at home, in restaurants, etc.

Hence, the invention is also directed to a method of preparing a microwave food product comprising treating a microwave food product with the food additive according to the invention, and in a specific embodiment further comprising applying microwave radiation, such that a ready microwave food for consumption is obtained. A ready microwave food obtainable by a method of preparing a microwave food product comprising treating a microwave food product with a food additive according to the invention, further comprising applying microwave radiation, is also an aspect of the invention. The person skilled in the art, will choose the suitable microwave power and heating time, depending for instance on the desired temperature of the ready microwave food and depending upon the type of CaCl₂-treated porous particles applied (coating thickness, etc.). For the effect to occur it seems desired to quickly build up an internal pressure in the CaCl₂ treated porous particles, and this suitably can be achieved by applying a relatively high power. A suitable microwave power that is applied is at least 300 Watt, more preferably at least 500 Watt, for example 700-1200 Watt, like more than 800 Watt or 900 Watt or more and even at least 1000 W. The microwave heating time for the present CaCl₂-treated porous particles not included in or applied onto a food product is preferably 0.2-20 seconds, more preferably 0.5-15 seconds, even more preferably at least 1-10 seconds (for example at at least 1000 W). Good results were obtained when a heating at about 1000 Watt for about 1-10 seconds. The person skilled in the art will choose the right time depending upon amongst others the type of CaCl₂-treated porous particles applied, their optional coating, the amount of calcium compound(s) and the type of meal or snack or drink etc. for example by taking into account the amount of water as liquid in the food product.

The invention is also directed to a non-food application of the additive, for example in a method for inducing an aromatic effect, for example in a shop, warehouse, on the market, indoor or outdoor, etc., by heating in a microwave the CaCl₂-treated porous particles of the invention comprising a fragrance. In this way, at a predetermined time one may release appropriately selected aromas/fragrances.

Hence, the invention provides in a specific embodiment porous amorphous silica particles (or analogues thereof, see above) having dimensions between about 0.005 and 5 mm (weight averaged mean particle size) which are impregnated with a CaCl₂ containing solution or suspension, which solution or suspension further comprises an active ingredient, wherein the active ingredient is selected from one or more ingredients selected from the group consisting of colorants, flavours and fragrances, and wherein the particles are optionally coated with a coating, wherein the coating comprises one or more materials selected from the group consisting of cellulose, alginate, carrageenan, gellan, a pectin, a fat and an oil solid at room temperature and wherein the optional coating has a coating thickness between 0.5 µm and 5 mm. Preferably, at least 90 wt.% of the porous amorphous silica particles have dimensions smaller than 10 mm; more preferably at least 90 wt.% of the porous amorphous silica particles have dimensions smaller than 5 mm. Preferably, the optional coating is less then 5 mm, preferably between 10 µm and 1 mm.

### Examples

### Example 1

Food grade porous silica (SiO₂, preferably Zeofree®, for example Zeofree® 5170 of Huber Engineered Materials) particles are impregnated with calcium chloride (CaCl₂) and coated with fat or alginate gel. The porous silica is dispersed in an aqueous solution of CaCl₂. The concentration of silica is between 10% and 90 % on mass basis. The concentration CaCl₂ is between 0.1 and 2 M, preferable 1.3 M. The suspension is centrifuged. The pellet is collected.

To make CaCl₂-treated porous particles with a coating small aliquots of the pellet (0.01 - 1 ml) (i.e. agglomerates of the CaCl₂-treated porous particles) are added to a solution of a suitable food grade hydrocolloid, preferably 1% sodium alginate. This causes an alginate coating to be formed on the outside of the CaCl₂-treated porous particles. The gel-coated CaCl₂-treated porous particles are sieved off and washed with water. Alginate solutions can for example be made by heating at about 60°C a suspension of Na alginate powder under stirring. Other temperatures may also give good results.

### Example 2

Non-coated CaCl₂-treated porous particles (e.g. as obtained in example 1) were coated by dripping aliquots of the pellet into molten fat. The fat has a temperature only marginally higher than the melting temperature. The melting temperature of the fat should be higher than room temperature (20°C). A solid fat layer is formed around the cold fragments and the particles can be scooped out of the liquid fat.

### Example 3

7 Grams of food grade porous silica is added to 100 grams 1.3 M CaCl₂ to which 0.01 % fluorescein (a non-food grade colour) was added. The suspension was centrifuged for 20 min at 5000 rpm. The pellet was collected by pouring off the supernatant. The pellet contained porous silica with adsorbed CaCl₂ and fluorescein (i.e. the CaCl₂-treated porous particles contained fluorescein as demonstration sample of an active ingredient). Small scoops of pellet (about 0.05 gram) (i.e. agglomerates of the CaCl₂-treated porous particles) were dripped in a 1% Na-alginate solution. The pellet fragments were coated by a Ca-alginate gel layer (determined visually) and were sieved off not more than 1 min after the pellet fragments were added to the alginate solution.

About 1 gram of alginate coated CaCl₂ containing porous silica was spread in the central area of a Petri dish. The Petri dish with the lid on top was put in a standard kitchen microwave oven. 1000 W was applied for 30 s. After about 10 s after switching on the power the particles exploded spreading the fluorescein over the total area of the Petri dish and against the lid.

### Example 4

A typical microwave food product (mashed potatoes, lasagne) was prepared in an original version and in a version containing 0.1% of the fat coated porous silica particles (similar to example 2) in the activated form containing a volatile flavour (fragrance) (onion, cheese) as active ingredient. Heating a one-serving size (250 gr.) in a standard kitchen microwave for 2 minutes resulted in a clear difference in perceived air borne aroma, thereby providing a desired aroma effect.

These examples shows that the application of food grade coated porous silica particles in foods to increase e.g. the flavour during microwave preparation may be due to the shattering or forceful disintegration of the particles within the food composition during heating.

## Claims

1. A process for the preparation of a food additive for a microwave food product, comprising a) providing CaCl₂-treated porous particles by mixing an active ingredient, a liquid, a particulate porous material having a weight averaged particle size between 0.005 and 5 mm, and CaCl₂; and b) optionally coating the CaCl₂-treated porous particles with a coating.

2. The process according to claim 1, wherein the particulate porous material comprises a zeolite or porous amorphous silica.

3. The process according to one of the preceding claims, wherein the liquid comprises water.

4. The process according to one of the preceding claims, wherein the CaCl₂-treated porous particles are provided by mixing the active ingredient, a 0.01-15 M CaCl₂ aqueous solution, and 0.1-95 wt.% (relative to the total weight of the aqueous solution) particulate porous material.

5. The process according to one of the preceding claims, wherein the coating comprises one or more materials selected from the group consisting of cellulose, alginate, carrageenan, gellan, a pectin, a fat and an oil solid at room temperature.

6. The process according to one of the preceding claims, wherein the optional coating has a coating thickness between 0.5 µm and 5 mm.

7. The process according to one of the preceding claims, wherein the active ingredient is selected from one or more ingredients selected from the group consisting of colorants, flavours and fragrances.

8. The process according to one of the preceding claims, further comprising retrieving a food additive particulate powder.

9. A food additive for a microwave food product obtainable by the process according to one of claims 1-8.

10. The food additive according to claim 9, comprising 30-100 wt.% CaCl₂-treated porous particles and 0-70 wt.% coating, relative to the total amount of the food additive, and wherein the CaCl₂-treated porous particles comprises 5-95 wt.% water, 0.0001-10 wt.% active ingredient, 0.01-10 wt. CaCl₂, and 5-95 wt.% particulate porous material, relative to the total amount of the CaCl₂-treated porous particles.

11. A microwave food product comprising a food additive as defined in one of claims 1-10.

12. Use of a food additive according to one of claims 9-10 for treating a microwave food product.

13. Use according to claim 12 for inducing one or more effects selected from the group consisting of a colorant, flavour and aromatic effect.

14. Use according to one of claims 12 or 13, wherein the microwave food product comprises a microwave meal, snack, sauce, dressing, or drink.

15. A method of preparing a microwave food product comprising treating a microwave food product with a food additive according to one of claims 9-10, optionally further comprising applying microwave radiation.
